# EUROPEAN PATENT APPLICATION

(11) **EP 4 280 805 A1**
(43) Date of publication of application: **22.11.2023**
(21) Application number: 23174286.7
(22) Date of filing: 19.05.2023
(51) Int. Cl.: H04W 76/36, H04W 88/12, H04W 28/02

(54) **METHOD AND APPARATUS FOR OPTIMIZATION OF RESOURCE IN A SPLIT BASE STATION ARCHITECTURE**

(30) Priority: 20.05.2022 IN 202241029170
(71) Applicant: Nokia Technologies Oy, 02610 Espoo (FI)
(72) Inventor: KAASALAINEN, Janne Veikko, Soderkulla (FI); CHANDRASHEKAR, Subramanya, Bangalore (IN); MACKOWIAK, Pawel, Krakow (PL); ARJONA, Andres, Tokyo (JP)
(74) Representative: Nokia EPO representatives

(57) **Abstract**

In some example embodiments, there may be provided a method that includes receiving, by a central unit user plane function of a radio network node, a bearer context setup request message from a central unit control plane function of the radio network node, wherein the bearer context setup request message comprises at least one of a list of preemption candidates or a preemption criteria; and selecting, by the central unit user plane function at least one preemption candidate based on the bearer context setup request message. Related systems, methods, and articles of manufacture are also disclosed.

## Description

The subject matter described herein relates to wireless communications.

### Background

With the 5^{th} generation (5G) of mobile communication, the network is being driven with respect to latency, throughput, and spectral efficiency. With the advent of the 6^{th} generation (6G) and beyond, the network may be pushed even further, so there is a need to facilitate gains in network performance.

### Summary

In some example embodiments, there may be provided a method that includes receiving, by a central unit user plane function of a radio network node, a bearer context setup request message from a central unit control plane function of the radio network node, wherein the bearer context setup request message comprises at least one of a list of preemption candidates or a preemption criteria; and selecting, by the central unit user plane function at least one preemption candidate based on the bearer context setup request message.

In some variations, one or more of the features disclosed herein including the following features can optionally be included in any feasible combination. The list of preemption candidates includes one or more bearer identifiers and/or one or more identifiers for one or more user devices. The list of preemption candidates is ranked in accordance with a priority of the one or more bearers and/or the one or more identifiers. The bearer context setup request message is received subsequent to a bearer context setup causing resources to exceed an available capacity at the central unit user plane function. In response to the central unit user plane function identifying that a bearer allocation for a user device associated with the bearer context setup request message will cause an available capacity to exceed a threshold capacity at the central unit user plane function, the central unit user plane function selects the at least one preemption candidate for release. The at least one preemption candidate is selected from the list of preemption candidates. The central unit user plane function sends a bearer context setup response message indicating the at least one preemption candidate was selected using the bearer context setup request message. The at least one preemption candidate represents at least one bearer and/or at least one user device that has been or will be released due to a preemption. The central unit user plane function identifies that a bearer allocation for a user equipment associated with the bearer context setup request message will cause available capacity to exceed a threshold capacity at the central unit user plane function. The central unit user plane function releases the at least one preemption candidate selected by the central unit user plane function from at least the list of preemption candidates. The radio network node comprises or is comprised in a distributed architecture base station.

In some example embodiments, there may be provided a method that includes sending, by a central unit control plane function of the radio network node, a bearer context setup request message to a central unit user plane function of the radio network node, wherein the bearer context setup request message comprises at least one of a list of preemption candidates or a preemption criteria; and receiving, by the central unit control plane function, at least one preemption candidate that is selected at least in part from the list of preemption candidates or the preemption criteria based on the bearer context setup request message.

In some variations, one or more of the features disclosed herein including the following features can optionally be included in any feasible combination. The list of preemption candidates indicates one or more bearer identifiers and/or one or more identifiers for one or more user devices. The list of preemption candidates is ranked in accordance with a priority of the one or more bearers and/or the one or more identifiers. The at least one preemption candidate is received subsequent to a bearer context setup causing resources to exceed an available capacity at the central unit user plane function. The at least one preemption candidate is selected from the list of preemption candidates. The at least one preemption candidate represents at least one bearer and/or at least one user device that has been or will be released due to a preemption. The central unit control plane function releases the at least one preemption candidate selected by the central unit user plane function from at least the list of preemption candidates. The radio network node comprises or is comprised in a distributed architecture base station.

In some example embodiments, there may be provided a method that includes receiving, by a central unit user plane function of the radio network node, a service level agreement criteria from a central unit control plane function of the radio network node, wherein the service level agreement criteria maps to one or more resources at the central unit user plane function and defines at least a quality of service for the resource at the central unit user plane function; and responding, by the central unit user plane function of the radio network node, to the central unit control plane function with information regarding an overload of the resource.

In some variations, one or more of the features disclosed herein including the following features can optionally be included in any feasible combination. The responding is performed in response to receiving the service level agreement criteria in a status request from the central unit control plane function. The responding is performed as an update on a status of the resource. The information regarding the overload includes one or more of the following: a network slice identifier for the resource, a single - network slice selection assistance information for the resource, a guaranteed bit rate for the resource, a non-guaranteed bit rate for the resource, or a 5G QoS identifier for the resource. The information regarding the overloaded is sent subsequent to a bearer context setup causing resources to exceed an available capacity at the central unit user plane function. The radio network node comprises or is comprised in a distributed architecture base station.

In some example embodiments, there may be provided a method that includes sending, by a central unit control plane function of the radio network node, a service level agreement criteria to a central unit user plane function of the radio network node, wherein the service level agreement criteria maps to one or more resources at the central unit user plane function and defines at least a quality of service for the resource at the central unit user plane function; and receiving, by the central unit control plane function of the radio network node, a response from the central unit user plane function, wherein the response includes information regarding an overload of the resource. The central unit control plan function of the radio network node may further initiate an action in response to the response including the information.

In some variations, one or more of the features disclosed herein including the following features can optionally be included in any feasible combination. The action comprises one or more of the following: a preemption of a bearer, a preemption of a user equipment, or a load balancing to another central unit user plane function. The response is received responsive to a request from the central unit control plane function to the central unit user plane function. The response including the information regarding the overload is received as an update on a status of the resource. The information regarding the overload includes one or more of the following: a network slice identifier for the resource, a single - network slice selection assistance information for the resource, a guaranteed bit rate for the resource, a non-guaranteed bit rate for the resource, or a 5G QoS identifier for the resource. The radio network node comprises or is comprised in a distributed architecture base station. The method may further include initiating, by the central unit control plane function of the radio network node, an action, in response to the response including the information.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of Drawings

In the drawings,
FIG. 1 depicts an example of a distributed architecture base station, in accordance with some example embodiments;
FIG. 2 depicts a distributed architecture base station and user equipment accessing slices, in accordance with some example embodiments;
FIG. 3 depicts an example of a signaling flow between a gNB-CU-CP and a gNB-CU-UP, in accordance with some example embodiments;
FIG. 4 depicts another example signaling flow between a gNB-CU-CP and a gNB-CU-UP, in accordance with some example embodiments;
FIG. 5 depicts another example of a signaling flow between a gNB-CU-CP and a gNB-CU-UP, in accordance with some example embodiments;
FIG. 6 shows another example of a signaling flow between a gNB-CU-CP and a gNB-CU-UP, in accordance with some example embodiments;
FIG. 7 depicts an example of a network node, in accordance with some example embodiments;
FIG. 8 depicts an example of an apparatus, in accordance with some example embodiments;
FIG. 9A depicts an additional example of a process for optimizing resources for a radio network node, in accordance with some example embodiments;
FIG. 9B depicts an additional example of a process for optimizing resources for a radio network node, in accordance with some example embodiments;
FIG. 9C depicts an additional example of a process for optimizing resources for a radio network node, in accordance with some example embodiments; and
FIG. 9D depicts an additional example of a process for optimizing resources for a radio network node, in accordance with some example embodiments.

Like labels are used to refer to same or similar items in the drawings.

### Detailed Description

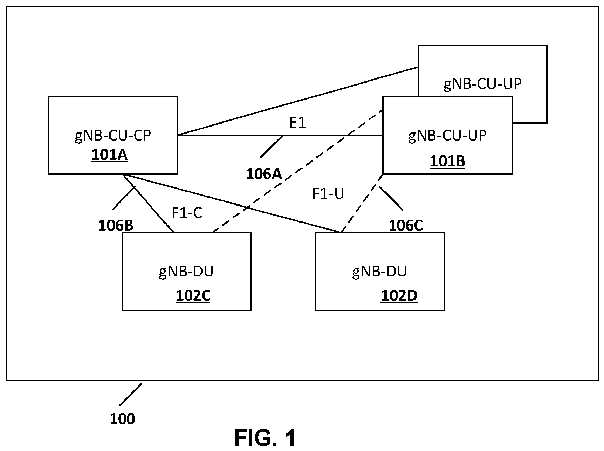

The base station, such as a gNB, may be implemented as multiple different scalable computing units, such as logical entities. FIG. 1 depicts an example of such a gNB, which is also referred to as a distributed (or split, or disaggregated) gNB base station 100 including one or more logical entities, such as a central unit (CU) which may include a gNB central unit control plane (gNB-CU-CP) entity 101A and one or more gNB central unit user plane entities 101B (gNB-CU-UP), in accordance with some example embodiments. The disaggregated gNB base station may also include and/or control one or more gNB distributed units 102C-D (gNB-DU) entities. The E1 interface 106A is the interface between the central unit control plane and the central unit user plane. The F1 interface is between the central unit and one or more distributed units. In the example of FIG. 1, the F1 interface includes an F1-C 106B interface between the central unit control plane and the DUs, and an F1-U interface 106C between the central unit user plane and the DUs.

The gNB distributed unit (also referred to as DU), such as DUs 102C-D, may be at least partly controlled by the gNB-CU 101A-B. And, a single gNB-DU may support (e.g., control and/or handle) one or more cells (e.g., up to 512 cells although other quantities may be implemented as well), but any given single cell is supported (or served by) only a single gNB-DU. The gNB central unit (also referred to as CU) 101A-B may handle less real-time functions. For example, the gNB-CU-CP may host the packet data convergence (PDCP), service data adaption protocol (SDAP), and radio resource control (RRC) protocols. On the other hand, the DU may handle more real-time functions related to radio link control (RLC), medium access control (MAC), and physical (PHY) layer protocols as well as scheduling.

When load increases, the 5G System (5GS) may increase the processing capacity with "scale out" (e.g., increase) processing capacity or when traffic demands get lower at a gNB (or a function or a unit of the gNB) can "scale in" (e.g., decrease) processing capacity. But scaling in or out may not in some instances be able to be performed in real time to respond to rapid changes in traffic. It may also be possible that the scaling capacity is reached. In these and other cases, when scale out of resources or capacity may not doable, it may be possible that the UE's performance may be limited by the gNB processing rather than radio interface capacity. When the gNB capacity is limited, the gNB should be able to allocate resources in defined priority orders. And, 3GPP does provide for a defined preemption procedure to allow higher priority for higher priority users (see, e.g., 3GPP TS 23.501, System architecture for the 5G System (5GS)). In a distributed (or split) gNB architecture where the gNB-CU-CP, the gNB-CU-UP, and the DUs are separated for example, the preemption functionality may not be optimal in all cases.

In the case of 5G (or New Radio, NR) for example, the use of slices is provided. With a network slice (or "slice" for short) one or more different slice users may be provided guaranteed resources. The slice may be considered, for example, a small virtual network inside the radio access network (RAN). And, a given gNB may provide service for one or more different slices. Network operators may have a service level agreement (SLA) on a cell basis to guarantee a given number (or quantity) of resources in a cell or a group of cells.

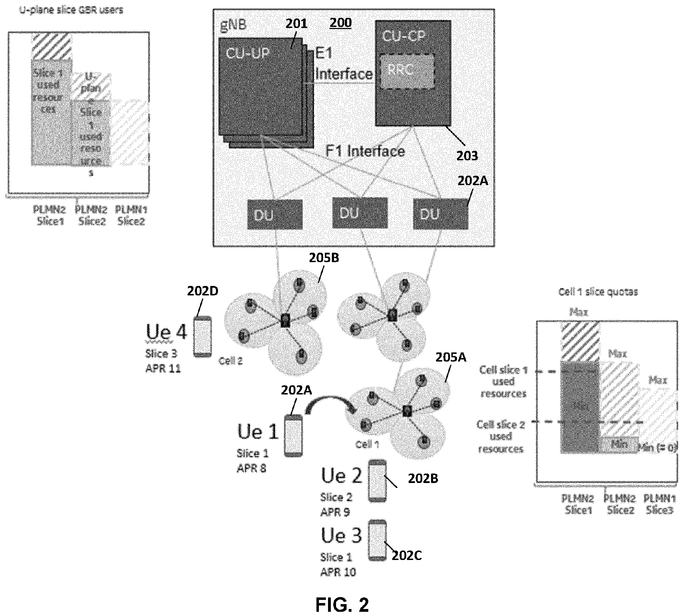

FIG. 2 depicts a disaggregated gNB 200 and user equipment 202A-D (labeled UE1 - UE4), in accordance with some example embodiments. The user equipment may also be referred to as a "user device" or a "user terminal." In the example of FIG. 2, the UE4 202D is being served by cell 205B and UE1-UE3 202A-C are being served by cell1 205A. Referring to the example of FIG. 2, the UE1 202A is setting up a protocol data unit (PDU) session to cell 1. In this example, the gNB may need to allocate the needed resources from the gNB-CU-UP 201 and from gNB-DU 202A. A problem is that the resource situation (e.g., availability, capacity, etc.) may be different in the gNB-CU-UP 201 from the resource situation in the DU 202A. This may occur due to the resource consumption at the DU 202A and the CU-UP 201 being different for different services (and/or slices), so a 1:1 dimensioning may not be practical or possible. The slice SLA may be performed on a cell basis (so that the SLA is applicable to the overall cell), but the gNB-CU-UP 201 does not know cells (i.e., may not be aware of cell specific resource situations). In a practical deployment for example, the capacity of the gNB and its units such as the DU or CU-UP is not a simple sum of the maximum cell capacities of all cells being hosted by the gNB or its units; in some cases, the capacity may be shared for multiple cells, for example.

The preemption of bearers (e.g., radio bearers or data radio bearers) or preemption of one or more UEs may have to be performed, when there is a full load (or, e.g., more than a threshold level load) in a gNB and additional upscaling of resources is not available and/or possible. When this is the case, if the gNB receives an access (or handover, HO) request from a higher priority UE, one of the existing lower priority UEs (or data radio bearer, DRB) may have to be released to admit the incoming higher priority UE.

Although a gNB may perform a preemption, a gNB-CU-UP may not have the possibility to do so under the current 5G framework. As such, it may be beneficial that if the gNB-CU-UP runs out of capacity and the gNB-CU-UP receives a bearer setup, the gNB-CU-UP can propose a release of an existing lower priority UE (or bearer) based on the Allocation and Retention Priority (ARP) parameters or based on the ARP parameters along with the slice. The allocation and retention priority (ARP) indicates a priority level for an allocation and retention of bearers. If the preemption decision is done based on just the allocation and retention priority parameters, the gNB-CU-UP may propose to release a bearer from UE4 202D, for example. In the example of FIG. 2, the UE4 202D may have a connection in completely different location and cell when compared to the UE1 202A. In that area and slice at cell 1 205A, the UEs may have different SLAs and the UEs may be using their guaranteed quota of resources. If the CU-UP 201 makes a decision based on the slice and the ARP, there still may be a problem as the gNB-CU-UP 201 may propose the bearer for the UE3 202C to be released. This UE3 may also use its guaranteed slice quota. As the user plane (UP) does not know cell specific rules, the gNB-CU-UP cannot identity that UE2 202B would be the best candidate to be released as it is lowest priority user using a slice that has already exceed the slice quota. When the SLA is done based on cell quotas, the UE priorities can heavily depend on the load of the cell. When the load increases over a minimum quota (or threshold), the UE priorities changes and in the current system the gNB-CU-UP does not have this information.

If the preemption procedure is implemented fully at the gNB-CU-CP 203 (e.g., as in the current 5G framework without any inputs from the CU-UP 201), the gNB-CU-CP 203 may identify the best candidates from a priority point of view as the gNB-CU-CP knows (1) what gNB-CU-UP is being used by the gNB-CU-CP and (2) the cell level resources. A problem in this case is, however, that the gNB-CU-CP does not know if the release of the preemption candidate actually helps anything from resource consumption point of view. In other words, it is possible that the UE (which is preempted due to the gNB-CU-CP) is in, for example, a low activity phase and does not cause a load for the gNB-CU-UP. In this example, the CU-UP input for preemption would have been extremely crucial. In other words, a removal of a bearer context from gNB-CU-CP may not alleviate the capacity issues at gNB-CU-UP.

If the gNB-CU-CP 203 leaves the preemption procedure for the gNB-DU such as 202A, the gNB-DU may also be able identify a best preemption candidates on the cell level but as the gNB-DU may have different resource situation compared to CU-UP and the gNB-DU may not trigger any preemption (even when required) and even if the gNB-DU would trigger, the gNB-DU may or may not help the gNB-CU-UP that is running out of capacity. In other words, the current 5G framework allows actions to take place based only on local information without taking into account the broader scope of state that may exist. Specifically, a problem in the current preemption framework (see, e.g., 38.463 v.16.8.0 E1 application protocol (E1AP)) definitions is that the current 5G framework does not provide any way to handle optimally a cell level slice with the E1 106A interface. Furthermore, the cell level slice quota concept is a desired aspect not supported by this 5G framework.

Similar problems may also apply when the gNB-CU-UP 201 have limitations with respect to certain resources. For example, the GNB-CU-UP may have a limited capacity to handle guaranteed bit rate (GBR) traffic or low latency QoS flows. But in the current 5G framework, the gNB-CU-UP can only indicate a general load of the gNB-CU-UP, but this may only assist the gNB-CU-CP 203 to make general load balancing but does not allow selection of an optimal gNB-CU-UP based on the requested bearer type (e.g., 5G QoS Identifier (5QI), slice, and/or the like).

In some example embodiments, there is provided preemption rules for the gNB-CU-CP and gNB-CU-UP to exchange needed information to provide cell level quotas in the gNB. In some example embodiments, there is also provided a process for how the gNB-CU-CP can make an optimal gNB-CU-UP selection.

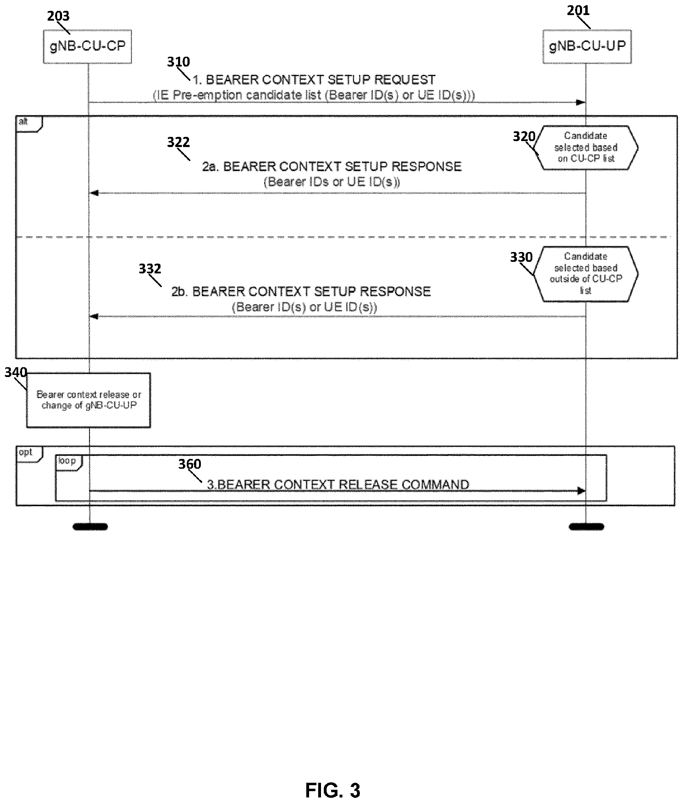

In the example of FIG. 3, the gNB-CU-CP may define (and/or provide) one or more preemption candidates for the gNB-CU-UP, in accordance with some example embodiments. For one or more bearers (or bearer contexts) being considered for preemption, the gNB-CU-UP may be aware of what bearers or bearer contexts (if preempted) can alleviate the load, and the gNB-CU-UP may also be aware of a priority and a QoS for a given bearer (which if preempted) will not undermine more important (e.g., higher priority) bearers.

Referring to FIG. 3, when the gNB-CU-CP 203 identifies that a gNB-CU-UP (e.g., gNB-CU-UP 201) may run out of resources (e.g., processing capacity) and a SLA for a network slice in the gNB 200 is based on cell level quotas for example, one or more of the following may occur.

At 310, the gNB-CU-CP 203 may define one or more lower priority bearers and deliver via a message (e.g., a bearer context setup request message) a list of those lower priority bearers to the gNB-CU-UP 201, in accordance with some example embodiments. As the gNB-CU-CP knowns most (if not all) bearers used at a given cell, the network slice quotas, and the allocation and retention priority (ARP) parameters of each UE, the CU-CP 203 may generate a list, such as a so-called "shortlist" of the best candidates for gNB-CU-UP to select for preemption. The gNB-CU-CP may define the candidates for preemption on a per bearer basis using bearer IDs and/or with UE IDs (e.g., gNB-CU-CP UE E1AP ID IE as defined in for example, 3GPP TS 38.463, NG-RAN; E1 Application Protocol (E1AP)). For example, the list for preemption may include a list of Data Radio Bearer (DRBs) with their corresponding identifier. Referring again to FIG. 2, the candidate list may include, for the cell1 205A, the bearer IDs or UE IDs sorted based on for example ARP, such as highest priority to lowest priority. Alternatively, or additionally, the list may take into account the slice, such as slice ID.

When the gNB-CU-UP 201 identifies that a new (or modified) bearer allocation for a UE will lead to a resource issue (e.g., overload or insufficient capacity) for example, the CU-UP may, at 320, use the list (which is provided at 310) to determine the priority of candidate bearers or UEs for preemption, in accordance with some example embodiments. The gNB-CU-UP may select bearer candidate(s) or UE ID(s) to be released as part of the preemption by at least using the list (provided at 310) together with a comparison between expected resource consumption of the new (or modified) UE (and/or DRBs) and with the expected resource released by the UE (and/or DRBs) that are selected for preemption. Referring to FIG. 2 for example, if the addition of a bearer for UE1 202A (which is accessing slice 1) at cell1 205A causes a resource issue (e.g., overload or insufficient capacity) for example, the CU-UP may, at 320, use the list (which is provided at 310) to select at least one of the bearers associated with, for example, UE2 202B and/or UE3 202C. In the response message at 322 (which in this example is a bearer context setup response message), the gNB-CU-UP may provide to the gNB-CU-CP 203 information regarding the bearer candidate(s) or UE ID(s) selected (at 320) to be released as part of the preemption.

Alternatively, or additionally, if the gNB-CU-UP 201 determines the candidates for preemption in the list (provided at 310) were not enough (e.g., to alleviate the resource or overload issue) and/or the candidates (provided at 310) did not included the needed candidates (e.g., the gNB-CU-UP detects resource issue only in one of its subunits which is unknown to gNB-CU-CP while provided preemption candidates are served by subunits with no resource issue), the gNB-CU-UP may also select, at 330, one or more candidate bearers (or one or more UEs) outside of the list (e.g., which were not part of the list) for preemption, in accordance with some example embodiments. In the response message at 332 (which in this example is a bearer context setup response message), the gNB-CU-UP may provide to the gNB-CU-CP 203 information regarding the selected bearer candidate(s) or UE ID(s) (which were selected at 330), in accordance with some example embodiments. And, at least one of bearer or UE IDs provided at 332 are outside (e.g., not included) in the list provided at 310 to be released as part of the preemption.

Although FIG. 3 depicts messages 322 and 332 as separate messages, these messages may be included in a single message. For example, the response message (which in this example is a bearer context setup response message), the gNB-CU-UP may provide at 322 to the gNB-CU-CP 203 information regarding the selected bearer candidate(s) or UE ID(s), wherein at least one of the selected bearer candidate(s) or UE ID(s) are outside (e.g., not included) in the list provided at 310.

When gNB-CU-CP 203 receives the bearer context setup release request at 322 or 332 for example, the CU-CP 203 may make a decision, at 340, regarding whether to release the bearer (and/or the corresponding UE) or move the bearer (and/or the corresponding UE) to another gNB-CU-UP. At 360, the gNB-CU-CP 203 sends a message, such as a bearer context release command, indicating to the gNB-CU-UP 201 the release of the bearers for the UE.

If the bearer ID(s) or UE ID(s) provided at 322 (or 332) are not acceptable to the gNB-CU-CP (e.g., because too many UEs are impacted by the single higher priority request), the gNB-CU-CP 203 may instead release, at 360, the new bearer establishment (which was being established at 310, for example) for the gNB-CU-UP 201.

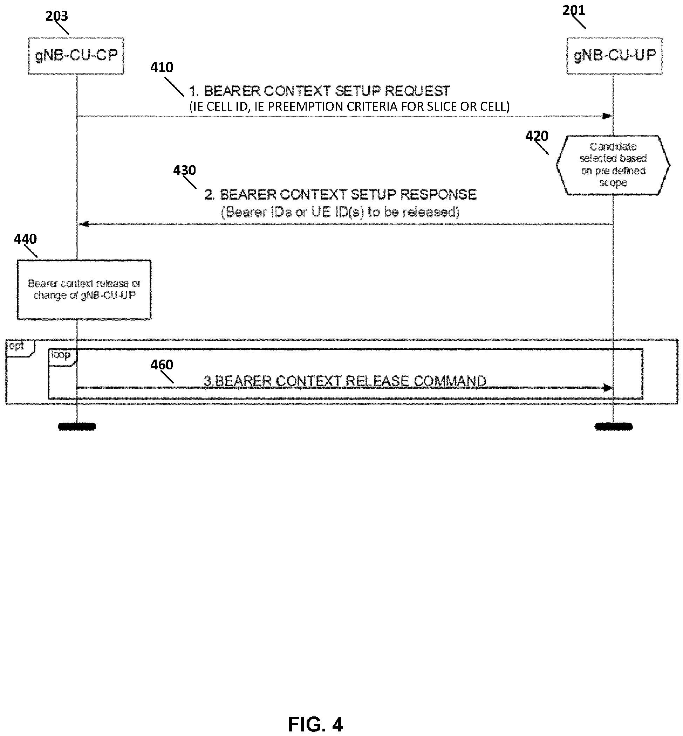

FIG. 4 depicts another example of a signaling flow between a gNB-CU-CP, such as CU-CP 203, and a gNB-CU-UP, such as CU-UP 201, in accordance with some example embodiments. In this example, the gNB-CU-CP may define (and/or provide) one or more criteria for the gNB-CU-UP. These criteria may indicate to the gNB-CU-UP how to select candidates for the preemption procedure. For example, the criteria may comprise the scope of preemption selection (e.g., the same slice or cell as the higher priority request), when there is a need due to for example a lack of resources. Referring to FIG. 2 for example, the preemption criteria may indicate that the preemption candidates should be selected from the same cell, such as cell1 205A or from the same slice, such as slice 1, so in the case of UE1 202A the same slice would provide a scope of UE3 202C while the same cell would include UE2 and UE3. Moreover, the control plane may map bearers to a SLA and may then deliver SLA rules for a new request. This SLA may represent cell level resources quotas per slice, so the scope is a part of SLA that will be followed for this UE.

At 410, the gNB-CU-CP 203 may send to the gNB-CU-UP 201 a bearer context setup or modification that includes the cell id (e.g., of the DU which is associated with a DRB being setup or modified) along with the preemption criteria, in accordance with some example embodiments. Referring again to FIG. 2 for example, the gNB-C

CU-CP 203 may send at 410 the preemption criteria for cell1 205A and/or for slice 1 and slice 2 at cell1 205A. The preemption criteria may define the scope as noted (e.g., preemption candidate scope from the same slice, same cell, same slice and same cell, none, etc.) and/or may be based on a defined SLA. The gNB-CU-UP may store the cell id along with the associated preemption criteria for the cell or slice(s).

When the gNB-CU-CP 203 identifies a risk of overload, the gNB-CU-CP may include preemption criteria ranked in order of priority (e.g., from lowest to highest priority order or vice versa). These criteria of preemption may be provided to the CU-UP at 410 (or at other times using other message types as well) to select, at 420, a best one or more preemption candidates to maintain gNB SLA on a defined level for the slice or cell. For example, the scope of preemption may include a list of candidates (e.g., one or more cells and/or one or more slices) for preemption in a preemption order (e.g., ranked either ascending order or descending order of priority for preemption).

In the response message 430, the gNB-CU-UP 201 provides to the gNB-CU-CP 203 information about the bearer candidate(s) or UE ID(s), which were selected at 420 for release, in accordance with some example embodiments. For example, the gNB-CU-UP may send a bearer context setup response message including the bearer IDs (and/or UE IDs) selected at 420 for preemption.

When the gNB-CU-CP receives the bearer context setup release request (e.g., at 430), the gNB-CU-CP may decide, at 440, if the selected bearers (which are indicated at 430) will be released or moved to other gNB-CU-UP, in accordance with some example embodiments. At 460, the gNB-CU-CP 203 sends a message, such as a bearer context release command, indicating to the gNB-CU-UP 201 the release of the bearers for the UE.

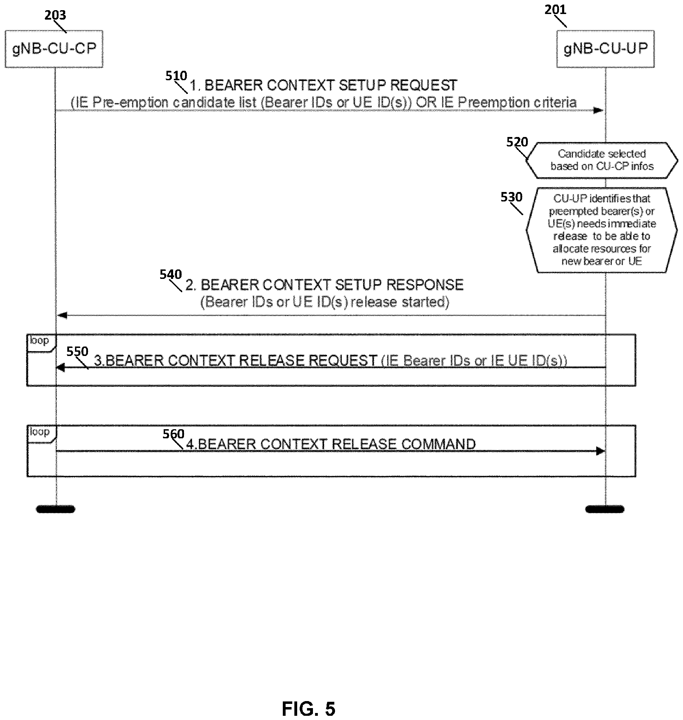

FIG. 5 depicts another example of a signaling flow between a gNB-CU-CP, such as CU-CP 203, and a gNB-CU-UP, such as CU-UP 201, in accordance with some example embodiments. In the example of FIG. 5, the gNB-CU-CP may send to the gNB-CU-UP a message 510 (which in this example is a bearer context setup request) which includes a preemption candidate list (as noted above at 310) and/or the preemption criteria (as noted above with respect to 410).

When gNB-CU-UP 201 identifies that the new bearer allocation (as indicated by the bearer context set up request) will lead to overload for example, the gNB-CU-UP may then use the information provided at 510 to select at 520 one or more candidate(s) for preemption, such as bearer IDs or UE IDs for preemption.

If the gNB-CU-UP 201 has a hard resource limitation (or e.g., reaches a threshold level of resources) and the gNB-CU-UP is able to select preemption candidates at 520 according to the gNB-CU-CP proposal provided at 510, the gNB-CU-UP may immediately release the resources allocated for the bearers being preempted. For example, if the gNB-CU-UP identifies (or finds) the preemption candidates based on the proposal from gNB-CU-CP, the gNB-CU-UP may immediately start a release procedure, at 530, in the gNB-CU-UP. With this procedure, the gNB-CU-UP is able to release resources and use them for new bearer without need to overbook resources until it receives release command from gNB-CU-CP. The resources may include radio resources, processing resources, memory resources, and/or other types of resources.

In the response message 540, the gNB-CU-UP 201 may provide information about selected bearer candidate(s) and/or UE ID(s) with information (or indication) that those bearers (or UEs) have been (or will be) released, in accordance with some example embodiments. When the gNB-CU-CP receives an indication at 540 that the listed bearers or UEs have been already released, the preemption cannot be rejected by gNB-CU-CP and the release towards to gNB-CU-UP could be avoided or optimized (e.g. not waiting for the release complete message before starting radio resource release from gNB-DU).

When the gNB-CU-CP receives indication at 540 that the listed bearers or UEs have not been released yet, then at 550, the gNB-CU-CP 203 may receive (from the CU-UP 201) the bearer context release request message, which indicates the bearer IDs and/or UE IDs that will be (or are being) released. At 560, the gNB-CU-CP releases the bearer with bearer context release command.

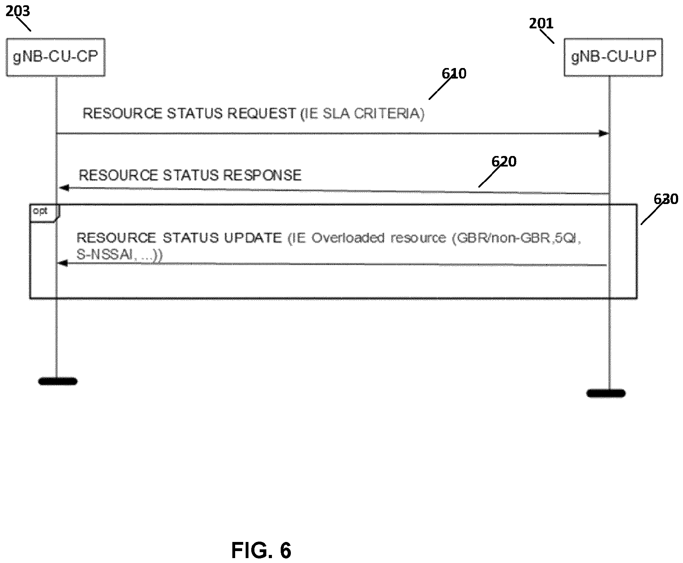

FIG. 6 shows another example of a signaling flow between a gNB-CU-CP, such as CU-CP 203, and a gNB-CU-UP, such as CU-UP 201, in accordance with some example embodiments. In the example of FIG. 6, the gNB-CU-UP 201 may provide to the gNB-CU-CP 203 information regarding an overloaded resource. In other words, the gNB-CU-UP is providing to the gNB-CU-CP information that is local at the gNB-CU-UP. With this additional information, the gNB-CU-CP can optimize for example gNB-CU-UP instance selection according to a requested bearer type to avoid need for preemption or, if a preemption is needed, make better decisions regarding preemption. In case of a high load for example, the gNb-CU-CP may use this additional information to define candidate characteristics and numbers of possible candidates for the preemption (e.g., as noted above with respect to FIGs. 3 and 4). Alternatively, or additionally, the CU-CP may use this additional information to avoid preemption as well (e.g., by load balancing to another CU-UP). Alternatively, or additionally, the CU-CP may use this additional information to allow the CU-CP to do preemption proactively based on the reported information for the resource(s).

In the example of FIG. 6, the gNB-CU-CP 203 sends, at 610, to the gNB-CU-UP 201 a resource status request, in accordance with some example embodiments. In the status resource request 610, the CU-CP includes rules, such as SLA criteria, for a given resource to enable the CU-UP to report the load for the resource(s) given the SLA. As noted, the CU-CP maps a given bearer to a SLA (e.g., cell level resource(s) quotas per slice), and the CU-CP delivers at 610 the SLA criteria or rule to the CU-UP. In other words, the SLA criteria informs the CU-UP on what the resource(s) are at the CU-UP for a slice for example, and what needs to be reported back to the CU-CP. The reporting may be if there is an overload state (e.g., the CU-UP cannot satisfy the SLA for the overloaded resource) although the reporting may occur at other times as well. The resource may be a network slice, a bearer, and/or the like.

At 620, the gNB-CU-UP 201 may provide a response to the CU-CP 203 as defined by a message sequence (see, e.g., 3GPP 38.463) regarding its status, in accordance with some example embodiments. At 630, the gNB-CU-UP may provide an updated response regarding its status, in accordance with some example embodiments. In the response 620 or the update 630, the gNB-CU-UP may provide to the gNB-CU-CP information regarding the resource (which may or may not be overloaded or may exceed a threshold level of overload) on the defined SLA level. Examples of the resource information provided to the CU-CP may include the S-NSSAI (Single - Network Slice Selection Assistance Information or other type of identifier for a slice), a GBR, a non-a GBR, a 5QI, etc.. With information regarding the overloaded resource(s), the gNB-CU-CP can optimize (1) gNB-CU-UP instance selection according to a requested bearer type to avoid need for preemption by for example moving or instantiating a resource at another CU-UP. Alternatively, or additionally, if a preemption is needed, the gNB-CU-CP can make better decisions regarding when and what to preempt.

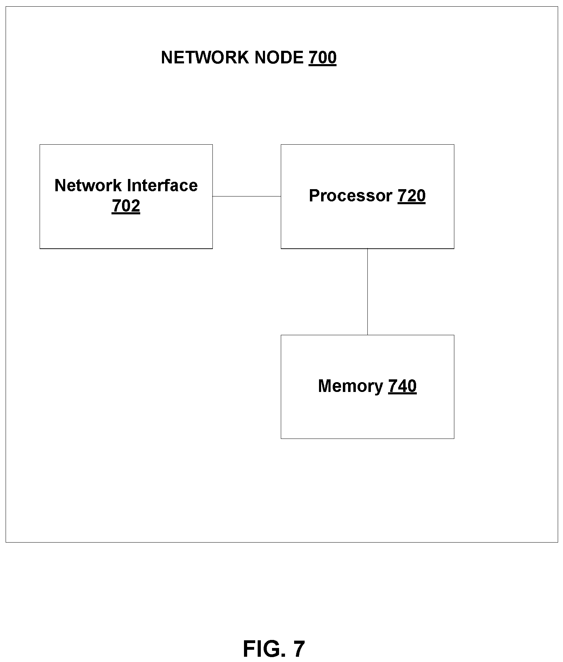

FIG. 7 depicts a block diagram of a network node 700, in accordance with some example embodiments. The network node 700 may comprise or be comprised in one or more network side nodes or functions (e.g., gNB, eNB, DU, TRPs, CU-UP, CU-UP, and/or the like).

The network node 700 may include a network interface 702, a processor 720, and a memory 704, in accordance with some example embodiments. The network interface 702 may include wired and/or wireless transceivers to enable access other nodes including base stations, other network nodes, the Internet, other networks, and/or other nodes. The memory 704 may comprise volatile and/or non-volatile memory including program code, which when executed by at least one processor 720 provides, among other things, the processes disclosed herein with respect to the network nodes, such as the DU, CU-UP, and/or CU-CP.

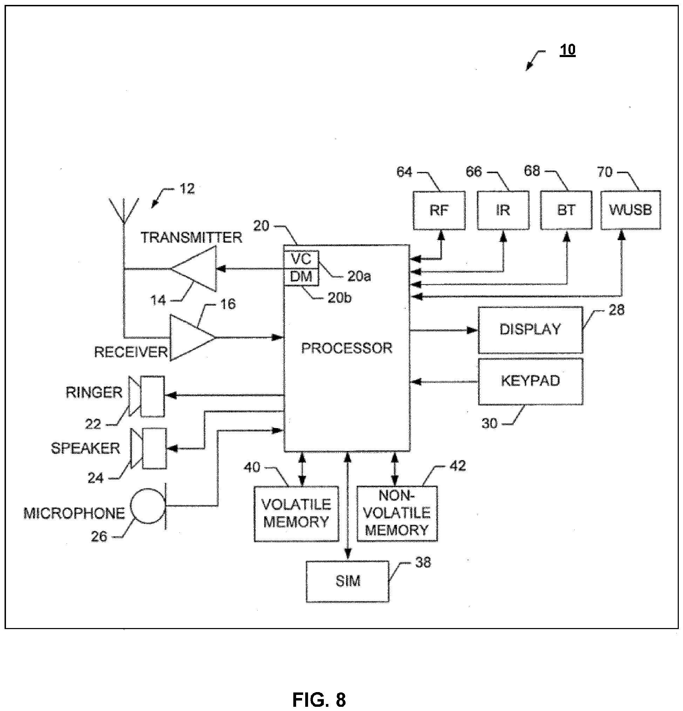

FIG. 8 illustrates a block diagram of an apparatus 10, in accordance with some example embodiments. The apparatus 10 may comprise or be comprised in a user equipment, such as user equipment 204. The user equipment may also be referred to as a user device or user terminal. In general, the various embodiments of the user equipment 204 can include cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions, in addition for vehicles such as autos and/or truck and aerial vehicles such as manned or unmanned aerial vehicle and as well as portable units or terminals that incorporate combinations of such functions. The user equipment may comprise or be comprised in an IoT device, an Industrial IoT (IIoT) device, and/or the like. In the case of an IoT device or IToT device, the UE may be configured to operate with less resources (in terms of for example power, processing speed, memory, and the like) when compared to a smartphone, for example.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 8 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signalling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, sixth-generation (6G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 8, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth^{™} (BT) transceiver 68 operating using Bluetooth^{™} wireless technology, a wireless universal serial bus (USB) transceiver 70, a Bluetooth^{™} Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, U-SIM, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiments, the application logic, software or an instruction set is maintained on any one of various conventional computer-readable media. In the context of this document, a "computer-readable storage medium" may be any non-transitory media that can contain, store, communicate, propagate or transport the instructions for use by or in connection with an instruction execution system, apparatus, or device, such as a computer or data processor circuitry; computer-readable medium may comprise a non-transitory computer-readable storage medium that may be any media that can contain or store the instructions for use by or in connection with an instruction execution system, apparatus, or device, such as a computer.

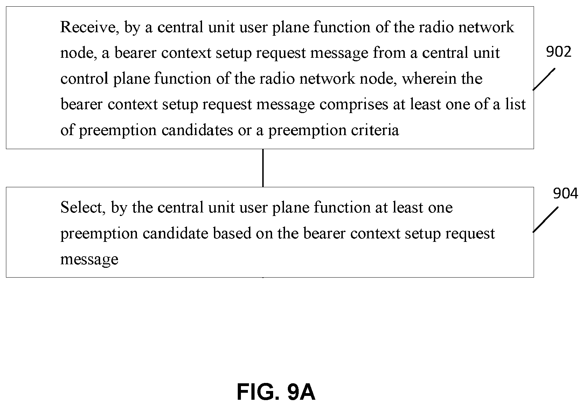

FIG. 9A depicts an example process for optimizing resources for a radio network node, in accordance with some example embodiments. At 902, a central unit user plane function of the radio network node may receive a bearer context setup request message from a central unit control plane function of the radio network node, in accordance with some example embodiments. The bearer context setup request message may include at least one of a list of preemption candidates or a preemption criteria (e.g., scope of preemption). At 904, the central unit user plane function may select at least one preemption candidate based on (e.g.,, using) the bearer context setup request message, in accordance with some example embodiments. The list of preemption candidates may include one or more bearer identifiers and/or one or more identifiers for one or more user devices. The list of preemption candidates may be ranked in accordance with a priority of the one or more bearers and/or the one or more identifiers. The bearer context setup request message may be received subsequent to a bearer context setup causing resources to exceed an available capacity at the central unit user plane function. In response to the central unit user plane function identifying that a bearer allocation for a user device associated with the bearer context setup request message will cause an available capacity to exceed a threshold capacity at the central unit user plane function, the central unit user plane function may select the at least one preemption candidate for release. The at least one preemption candidate may be selected from the list of preemption candidates. The central unit user plane function may send a bearer context setup response message indicating the at least one preemption candidate was selected using the bearer context setup request message. The at least one preemption candidate may represent at least one bearer and/or at least one user device that has been or will be released due to a preemption. The central unit user plane function may identify that a bearer allocation for a user equipment associated with the bearer context setup request message will cause available capacity to exceed a threshold capacity at the central unit user plane function. The central unit user plane function may release the at least one preemption candidate selected by the central unit user plane function from at least the list of preemption candidates. The radio network node may comprises or be comprised in a disaggregated (e.g., split) base station.

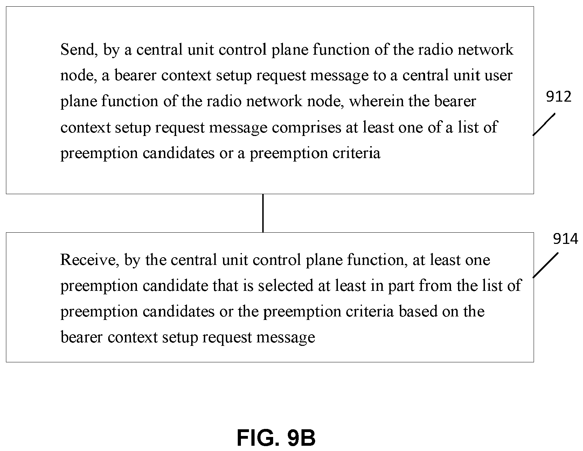

FIG. 9B depicts another example of a process for optimizing resources for a radio network node, in accordance with some example embodiments. At 912, a central unit control plane function of the radio network node may send a bearer context setup request message to a central unit user plane function of the radio network node, in accordance with some example embodiments. The bearer context setup request message may include a list of preemption candidates. Alternatively, or additionally, the bearer context setup request message may include a preemption criteria. At 914, the central unit control plane function may receive at least one preemption candidate that is selected at least in part from the list of preemption candidates or the preemption criteria based on the bearer context setup request message . Moreover, the list of preemption candidates may include one or more bearer identifiers and/or one or more identifiers for one or more user devices. The list of preemption candidates may be ranked in accordance with a priority of the one or more bearers and/or the one or more identifiers. The at least one preemption candidate may be received subsequent to a bearer context setup causing resources to exceed an available capacity at the central unit user plane function. The at least one preemption candidate may be selected from the list of preemption candidates. The at least one preemption candidate may represent at least one bearer and/or at least one user device that has been or will be released due to a preemption. The central unit control plane function may release the at least one preemption candidate selected by the central unit user plane function from at least the list of preemption candidates. The radio network node may comprise or may be comprised in a distributed architecture base station.

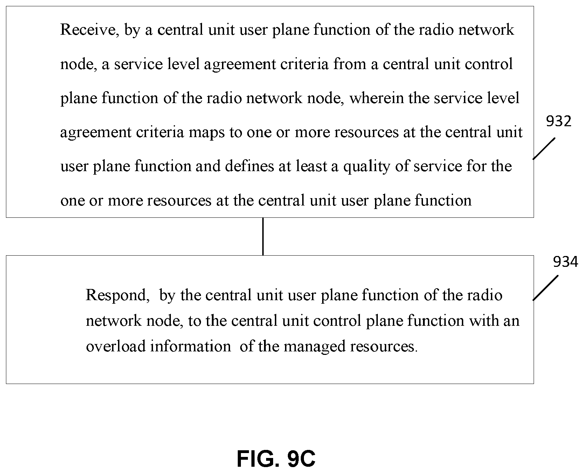

FIG. 9C depicts another example of a process for optimizing resources for a radio network node, in accordance with some example embodiments. At 932, the central unit user plane function of the radio network node may receive a service level agreement criteria from a central unit control plane function of the radio network node. This service level agreement criteria maps to one or more resources at the central unit user plane function and defines for example at least a quality of service for the resource at the central unit user plane function. At 934, the central unit user plane function may report back on the status of the resource. For example, the central unit user plane function may respond to the central unit control plane function with an information regarding a status of the resource, such as an overload information associated with the resource (or the resource exceeding a threshold). This response at 934 may be performed in response to receiving the service level agreement criteria in a status request from the central unit control plane function. Alternatively, or additionally, this response at 934 may be performed as an update on a status of the resource. The information regarding the overloaded resource may include one or more of the following: a network slice identifier for the resource, a single - network slice selection assistance information for the resource, a guaranteed bit rate for the resource, a non-guaranteed bit rate for the resource, or a 5G QoS identifier for the resource. The information regarding the overloaded may be sent subsequent to a bearer context setup causing resources to exceed an available capacity at the central unit user plane function or at other times as well.

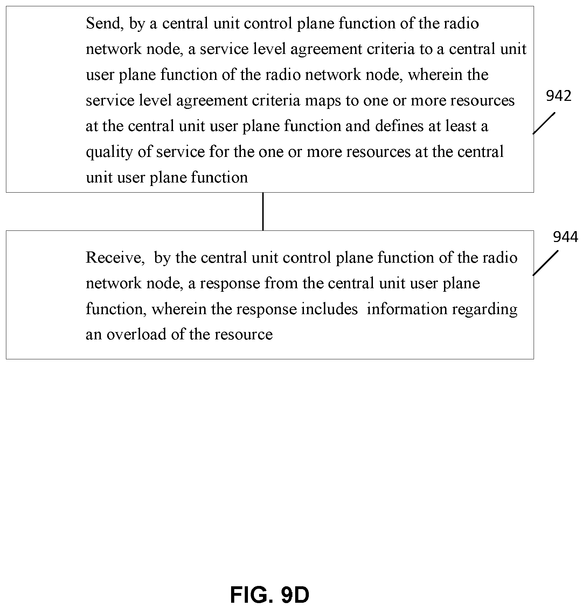

FIG. 9D depicts another example of a process for optimizing resources for a radio network node, in accordance with some example embodiments. At 942, the central unit control plane function may send a service level agreement criteria to a central unit user plane function of the radio network node. This service level agreement criteria maps to a resource at the central unit user plane function and defines at least a quality of service for the resource at the central unit user plane function. At 944, the central unit control plane function receives a response from the central unit user plane function. The response includes information regarding an overload of the resource. In some example embodiments, the central unit control plane function may initiate an action, in response to the response including the information. For example, the action may include one or more of the following: a preemption of a bearer, a preemption of a user equipment, or a load balancing to another central unit user plane function. The response may be received in response to a request from the central unit control plane function to the central unit user plane function. The response including the information regarding the overload may be received as an update on a status of the resource. The information regarding the overload may include one or more of the following: a network slice identifier for the resource, a single - network slice selection assistance information for the resource, a guaranteed bit rate for the resource, a non-guaranteed bit rate for the resource, or a 5G QoS identifier for the resource.

Without in any way limiting the scope, interpretation, or application of the claims appearing below, a technical effect of one or more of the example embodiments disclosed herein may include optimization of radio nodes.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

## Claims

1. A radio network node, comprising:
means for receiving, by a central unit user plane function of the radio network node, a bearer context setup request message from a central unit control plane function of the radio network node, wherein the bearer context setup request message comprises at least one of a list of preemption candidates or a preemption criteria; and
means for selecting, by the central unit user plane function at least one preemption candidate based on the bearer context setup request message.

2. The radio network node of claim 1, wherein the list of preemption candidates indicates one or more bearer identifiers and/or one or more identifiers for one or more user devices.

3. The radio network node of any of claims 1-2, wherein the list of preemption candidates is ranked in accordance with a priority of the one or more bearers and/or the one or more user device identifiers.

4. The radio network node of any of claims 1-3, wherein the bearer context setup request message is received in response to a bearer context setup causing resources to exceed an available capacity at the central unit user plane function.

5. The radio network node of any of claims 1-4, wherein in response to the central unit user plane function identifying that a bearer allocation for a user device associated with the bearer context setup request message will cause an available capacity to exceed a threshold capacity at the central unit user plane function, the central unit user plane function selects the at least one preemption candidate for release.

6. The radio network node of any of claims 1-5, wherein the at least one preemption candidate is selected from the list of preemption candidates.

7. The radio network node any of claims 1-6, wherein the radio network node is caused to:
send, by the central unit user plane function, a bearer context setup response message indicating the at least one preemption candidate was selected using the bearer context setup request message.

8. The radio network node of any of claims 1-7, wherein the at least one preemption candidate represents at least one bearer and/or at least one user device that has been or will be released due to a preemption.

9. The radio network node of any of claims 1-8, wherein the radio network node is caused to:
identify, by the central unit user plane function, that a bearer allocation for a user equipment associated with the bearer context setup request message will cause available capacity to exceed a threshold capacity at the central unit user plane function.

10. The radio network node of claim 9, wherein the radio network node is caused to:
release, by the central unit user plane function, the at least one preemption candidate selected by the central unit user plane function from at least the list of preemption candidates.

11. A radio network node comprising:
means for sending, by a central unit control plane function of the radio network node, a bearer context setup request message to a central unit user plane function of the radio network node, wherein the bearer context setup request message comprises at least one of a list of preemption candidates or a preemption criteria; and
means for receiving, by the central unit control plane function, at least one preemption candidate that is selected at least in part from the list of preemption candidates or the preemption criteria based on the bearer context setup request message.

12. The radio network node of claim 11, wherein the list of preemption candidates indicates one or more bearer identifiers and/or one or more identifiers for one or more user devices.

13. The radio network node of any of claims 11-12, wherein the list of preemption candidates is ranked in accordance with a priority of the one or more bearers and/or the one or more user device identifiers.

14. The radio network node of any of claims 11-13, wherein the at least one preemption candidate is received subsequent to a bearer context setup causing resources to exceed an available capacity at the central unit user plane function.

15. The radio network node of any of claims 11-14, wherein the at least one preemption candidate is selected from the list of preemption candidates.

16. The radio network node of any of claims 11-15, wherein the at least one preemption candidate represents at least one bearer and/or at least one user device that has been or will be released due to a preemption.

17. The radio network node of any of claims 11-16, further comprising:
means for releasing, by the central unit control plane function, the at least one preemption candidate selected by the central unit user plane function from at least the list of preemption candidates.
